# EUROPÄISCHE PATENTSCHRIFT

(11) **EP 3 912 457 B1**
(45) Veröffentlichungstag und Bekanntmachung des Hinweises auf die Patenterteilung: **05.07.2023**
(21) Anmeldenummer: 21156759.9
(22) Anmeldetag: 12.02.2021
(51) Int. Cl.: A01F 15/10

(54) **FÖRDERROTOR ZUM FÖRDERN VON ERNTEGUT SOWIE ERNTEMASCHINE MIT EINEM SOLCHEN FÖRDERROTOR**
CONVEYING ROTOR FOR CONVEYING CROPS AND HARVESTING MACHINE WITH SUCH A CONVEYING ROTOR
ROTOR DE CONVOYAGE POUR PRODUITS DE RÉCOLTE, AINSI QU' UNE MACHINE DE RÉCOLTE DOTÉE D'UN TEL ROTOR

(30) Priorität: 18.05.2020 DE 102020113365
(43) Veröffentlichungstag der Anmeldung: 24.11.2021
(73) Patentinhaber: PÖTTINGER Landtechnik GmbH, 4710 Grieskirchen (AT)
(72) Erfinder: Sandberger, Markus, 4710 Grieskirchen (AT)
(74) Vertreter: Thoma, Michael

(56) Entgegenhaltungen:
- DE-A1- 19 517 639
- DE-A1- 19 521 649
- DE-U1-202014 003 763
- US-A- 2 656 670
- US-A- 3 232 035

## Beschreibung

Die vorliegende Erfindung betrifft eine Erntemaschine mit einem Förderrotor zum Fördern von Erntegut, mit einer drehbar gelagerten Antriebswelle sowie einer Vielzahl von Förderzinken, die mit der Antriebswelle drehfest verbunden sind, beispielsweise in Form eines Ladewagens oder einer Ballenpresse.

Erntemaschinen wie Ladewagen oder Ballenpressen besitzen üblicherweise eine Aufnahmevorrichtung zum Aufnehmen von Erntegut vom Boden, das dann in weiterer Folge in den Laderaum des Ladewagens bzw. die Pressenkammer der Ballenpresse verbracht wird. Die Aufnahmevorrichtung umfasst hierzu üblicherweise zunächst eine Pickup mit einer rotierenden Stachelwalze, die das Erntegut vom Boden aufnimmt und an einen Förderrotor übergibt, der das Erntegut dann in den Laderaum bzw. die Pressenkammer fördert, ggf. unter Zusammenwirken mit Schneidmessern, um das Erntegut zu zerkleinern.

Solche Förderrotoren besitzen üblicherweise eine trommelförmig ausgebildete Antriebswelle, die sich von links nach rechts quer durch den Förderkanal erstreckt und umfangsseitig vorspringende Förderzinken trägt, die üblicherweise an dem Trommelmantel festgeschweißt sind. Die Förderzinken sind dabei oft in mehreren Reihen verteilt angeordnet, die sich entlang der Antriebswellentrommel erstrecken und ggf. auch verschraubt oder verschränkt sein können.

Alternativ zu solchen starren Förderrotoren sind auch sogenannte Förderschwingen bekannt, deren Förderzinken entlang einer Umlaufbahn um die Rotorachse herum umlaufend angetrieben und dabei verkippt werden. Solche gesteuerten Förderzinken ermöglichen zwar eine schonende Futterbehandlung, bringen jedoch eine komplexe und teure Steuermechanik mit sich, da die Förderzinken über Kipphebel bzw. Kurvensteuerbahnen entlang ihrer Umlaufbahn geführt werden müssen, um die gewünschten Kippbewegungen zu erzielen. Zudem leidet die Stabilität der Förderzinkenanordnung, da die Förderzinken nicht starr an einem stabilen Antriebswellenmantel befestigt sind.

Bei den Stachelwalzen von Pickups zum Aufnehmen von Erntegut vom Boden ist es bekannt, die vorstehenden Stachelzinken, die durch Schlitze zwischen Abstreiferblechen hervorstehen, starr an Querträgern zu befestigen, die mittels vorstehenden Flanschblechen auf einer innenliegenden Antriebswelle befestigt sind, wobei die Stachelzinken auf jeweils einem Querträger linear hintereinander aufgereiht sind, vgl. beispielsweise US 26 56 670 B und US 32 32 035 B. Im Gegensatz hierzu sind bei den Förderrotoren, die der Pickup nachgeordnet sind und mit einem Schneidwerk zusammenarbeiten, die Förderzinken einer Zinkenreihe oft zueinander verschränkt und in Umfangsrichtung um die Rotorachse zueinander verkippt, vgl. beispielsweise DE 20 2014 003 763 U1.

Bei starren Förderrotoren, deren Förderzinken ungesteuert mit der Antriebswelle umlaufen, treten zwar hinsichtlich der Stabilität keine größeren Probleme auf und die Förderzinken können auch direkt mit einem Schneidwerk zusammenwirken, wobei aufgrund der Stabilität hohe Schnittleistungen erzielbar sind. Allerdings sind solche starren Rotoren üblicherweise sehr schwer und damit bei der Montage und Reparatur unkommod in der Handhabung. Zudem sind Erntemaschinen mit solchen starren Förderrotoren auch nur recht aufwendig an unterschiedliche Kundenwünsche anpassbar, da beispielsweise breitere oder schmälere Förderzinken für unterschiedliche Erntegutschwerpunkte bei verschiedenen Landwirten letztlich nur durch Bereithalten verschiedener Förderrotoren konfigurierbar sind.

Der vorliegenden Erfindung liegt daher die Aufgabe zugrunde, einen verbesserten Förderrotor sowie eine verbesserte Erntemaschine mit einem solchen Förderrotor der eingangs genannten Art zu schaffen, die Nachteile des Standes der Technik vermeiden und letzteren in vorteilhafter Weise weiterbilden.

Erfindungsgemäß wird die genannte Aufgabe durch eine Erntemaschine gemäß Anspruch 1 gelöst. Bevorzugte Ausgestaltungen der Erfindung sind Gegenstand der abhängigen Ansprüche.

Es wird also vorgeschlagen, die Förderzinken nicht mehr direkt an der Antriebswelle festzuschweißen, sondern gruppenweise zusammenzufassen und separat montierbar auszubilden. Erfindungsgemäß sind die Förderzinken gruppenweise an Querträgern befestigt, die von der Antriebswelle radial beabstandet angeordnet und an Halteböcken befestigt sind, die von der Antriebswelle umfangsseitig vorspringen und drehfest mit der Antriebswelle verbunden sind. Im Vergleich zu einem klassischen Förderrotor, dessen Antriebswelle einen ausreichend großen Trommelmantel bildet, an dem die Förderzinken festgeschweißt sind, kann eine deutlich leichtere Bauweise erzielt werden, da der große, schwere Antriebswellen-Trommelmantel eingespart werden kann. Gleichzeitig kann der Förderrotor leichter an verschiedene Kundenwünsche angepasst werden, da nicht der gesamte Förderrotor insgesamt ausgetauscht bzw. in verschiedenen Konfigurationen bereitgehalten werden muss, sondern es können durch Anmontieren verschiedener Förderzinkengruppen durch Montage eines damit konfigurierten Querträgers unterschiedliche Rotorcharakteristiken erzielt werden.

Die Förderzinken sitzen insbesondere mit ihren Fußabschnitten nicht mehr auf der Antriebswelle, sondern enden radial von der Antriebswelle nach außen beabstandet an den Querträgern, sodass sich eine insgesamt leichtere, filigranere Rotorkonstruktion ergibt. Gleichzeitig tritt kein Verlust an Fördereffizienz ein, da die antriebswellennahen Fußabschnitte für die Förderwirkung weniger wichtig sind als die weiter außen liegenden Zinkenabschnitte. Die Antriebswelle kann schlanker als herkömmliche Antriebstrommeln ausgebildet und/oder geteilt ausgebildet bzw. abschnittsweise ausgespart werden.

Um dennoch eine hohe Rotorstabilität zu erzielen, können die Querträger zusammen mit den Halteböcken einen starren, offenen Käfig bilden, der die Antriebswelle umgibt und mit der Antriebswelle an mehreren Punkten starr verbunden ist, sodass sich ein gitterkäfigartiger Rotorgrundkorpus ergibt, an dem die Förderzinken umfangsseitig vorspringen.

Die Förderzinken können starr mit der Antriebswelle verbunden sein, um drehfest, ungesteuert mit der Antriebswelle umzulaufen, wobei die Förderzinken selbst starr an den Querträgern befestigt sein können, die Querträger starr an den genannten vorspringenden Halteböcken befestigt sein können und die genannten Halteböcke wiederum starr an der Antriebswelle befestigt sein können.

Um ein leichtes Umkonfigurieren des Förderrotors durch Vorsehen verschieden ausgebildeter Förderzinken und/oder Anbringen unterschiedlich vieler Förderzinkenreihen zu ermöglichen, können vorteilhafterweise die Querträger lösbar an den vorspringenden Halteböcken befestigt sein und/oder die genannten Halteböcke lösbar an der Antriebswelle befestigt sein. Insbesondere können die von der Antriebswelle umfangsseitig vorspringenden Halteböcke mit den Querträgern verschraubt und/oder mit der Antriebswelle verschraubt sein. Durch Lösen der Schraubverbindung können die Förderzinken gruppenweise durch Ummontage eines Querträgers ausgetauscht oder versetzt werden.

Insbesondere können die Querträger und/oder die Halteböcke in Umfangsrichtung versetzt an verschiedenen Positionen drehfest an der Antriebswelle montiert werden, sodass unterschiedlich viele, vorzugsweise wahlweise zwei, drei, vier oder fünf Querträger in Umfangsrichtung gleichmäßig verteilt an der Antriebswelle montierbar sind. Sollen beispielsweise drei Förderzinkenreihen an der Antriebswelle montiert werden, können drei Querträger um jeweils 120° voneinander beabstandet an der Antriebswelle montiert werden. Sollen andererseits vier Reihen von Förderzinken an der Antriebswelle montiert werden, können vier Querträger um jeweils 90° voneinander beabstandet an der Antriebswelle montiert werden.

Um eine versetzte Montage der Querträger an unterschiedlichen Umfangspositionen bzw. -sektoren zu ermöglichen, können die von der Antriebswelle vorspringenden Halteböcke und/oder ein Befestigungsflansch der Antriebswelle, an dem die Halteböcke befestigt werden können, beispielsweise ein unterschiedliches Lochbild aufweisen, um die Querträger in verschiedenen Schraubbolzenlöchern der Halteböcke und/oder die Halteböcke in verschiedenen Schraubbolzenlöchern am Halteflansch der Antriebswelle festschrauben zu können. Auch andere form- und/oder reibschlüssige Montagemittel können dazu konfiguriert sein, eine versetzte Montage der Querträger an unterschiedlichen Umfangspositionen bzw. -sektoren der Antriebswelle zu ermöglichen, beispielsweise Klemmspangen, die im gelösten Zustand in Umfangsrichtung der Antriebswelle an daran vorgesehenen Halteflanschen oder in daran ausgebildeten Langlöchern verschiebbar sind und in der gewünschten Psoition festgeklemmt werden können, bspw. durch Umgreifen des Halteflansches oder Verspreizen im Langloch.

Die genannten Halteböcke können vorteilhafterweise plattenförmige Halteflansche umfassen, die sich quer zur Längsachse der Antriebswelle und/oder quer zur Längsachse der Querträger erstrecken können. An einem weiter außen liegenden Abschnitt der Halteflansche können die Querträger befestigt werden und weiter innenliegende Abschnitte der Halteflansche können an der Antriebswelle befestigt werden.

In Weiterbildung der Erfindung sind zumindest zwei Halteböcke oder zwei Sätze von Halteböcken vorgesehen, die in axialen Endabschnitten der Antriebswelle drehfest an der Antriebswelle befestigbar sind, insbesondere starr mit der Antriebswelle verbindbar sind.

An den genannten, in den axialen Endabschnitten der Antriebswelle umfangsseitig vorspringenden Halteböcken können durchgängig ausgebildete Querträger mit gegenüberliegenden Querträgerendabschnitten befestigt werden. Die Querträger können sich im Wesentlichen über die gesamte Länge der Antriebswelle erstrecken und nur an den endseitigen Halteböcken gelagert bzw. befestigt sein, sodass die Querträger sich freitragend über die im Wesentlichen gesamte Länge der Antriebswelle von dieser beabstandet erstrecken.

In alternativer Weiterbildung der Erfindung kann aber auch zumindest ein weiterer Haltebock oder ein weiterer Satz von Halteböcken vorgesehen sein, die zwischen den endseitig angeordneten Halteböcken an der Antriebswelle befestigt werden können. Beispielsweise kann ein mittlerer Satz von Halteböcken etwa mittig an der Antriebswelle vorgesehen, insbesondere starr oder in anderer Weise drehfest mit der Antriebswelle verbunden sein. Solche mittigen Halteböcke können beispielsweise dazu genutzt werden, um durchgängig ausgebildete Querträger auch mittig abzustützen, um die Stabilität des von den Querträgern und Halteböcken gebildeten gitterartigen Käfigs nochmal zu erhöhen.

Insbesondere ermöglichen solche mittigen Halteböcke allerdings auch eine geteilte Ausbildung der Querträger. Insbesondere können Querträger vorgesehen sein, die jeweils eine Gruppe von Förderzinken tragen und dabei eine Länge besitzen, die nur einen Bruchteil der Länge der Antriebswelle bzw. einen Bruchteil des axialen Abstands der endseitigen Antriebswellenabschnitte beträgt und/oder nur einen Bruchteil der Förderkanalbreite und/oder der gesamten Rotorwelle beträgt.

Bei einer solchen geteilten Querträgerausbildung können die jeweiligen Querträger bzw. Querträgerteile mit einem Endabschnitt an einem Haltebock befestigt sein, der in einem axialen Endabschnitt der Antriebswelle vorgesehen ist, und mit einem gegenüberliegenden Endabschnitt an einem anderen Haltebock befestigt sein, der nicht am gegenüberliegenden axialen Endabschnitt der Antriebswelle, sondern einem dazwischenliegenden, insbesondere mittleren Antriebswellenabschnitt befestigt ist bzw. angeordnet ist.

Beispielsweise kann eine Zweiteilung oder Dreiteilung der sich über den Förderrotor erstreckenden Förderzinkenreihen bzw. der Querträger vorgesehen sein, sodass zwei oder drei Querträger in axialer Richtung der Antriebswelle betrachtet hintereinander angeordnet bzw. quer zur Antriebswellenachse betrachtet nebeneinander angeordnet sind.

Bei einer solchen geteilten Querträgerausbildung können die neben- bzw. hintereinanderliegenden Querträger koaxial zueinander angeordnet werden, sodass beispielsweise zwei oder drei Querträger einander ergänzen und einen durchgängigen Querträger ersetzen bzw. sich entlang einer gemeinsamen Querträgerachse erstrecken.

Alternativ ist es aber auch möglich, Querträger, die in axialer Richtung der Antriebswelle benachbart zueinander angeordnet sind, in Umfangsrichtung der Antriebswelle versetzt anzuordnen. Hierdurch kann eine in Umfangsrichtung besser abgestaffelte, die Förderkräfte vergleichmäßigende Förderzinkenanordnung erzielt werden. Insbesondere bei nur wenigen Förderzinkenreihen ist es hilfreich, wenn näherungsweise immer dieselbe Anzahl von Förderzinken mit dem Erntegut in Eingriff steht, um einen gleichmäßigen Lauf des Förderrotors zu erzielen bzw. die benötigten Antriebskräfte zu vergleichmäßigen.

Gleichzeitig verbessert eine solche in Umfangsrichtung versetzte Anordnung benachbarter Querträger deren Zugänglichkeit, sodass die Montage und Demontage insbesondere an den mittleren Halteböcken vereinfacht wird.

Die auf einem Querträger befestigten Förderzinken sind dabei unabhängig von einer geteilten oder durchgängigen Ausbildung der Querträger in Umfangsrichtung der Antriebswelle zueinander verkippt, insbesondere derart, dass entlang eines Querträgers die Förderzinken zunehmend jeweils ein Stück weiter in dieselbe Richtung verkippt angeordnet sind.

Die Erfindung wird nachfolgend anhand bevorzugter Ausführungsbeispiele und zugehöriger Zeichnungen näher erläutert. In den Zeichnungen zeigen:
- Fig. 1:: eine perspektivische Darstellung der Aufnahmevorrichtung einer Erntemaschine umfassend einen Förderrotor nach einer vorteilhaften Ausführung der Erfindung, wobei der Förderrotor drei Reihen von Förderzinken umfasst, die an drei jeweils durchgängigen Querträgern angeordnet sind,
- Fig. 2:: eine perspektivische Darstellung der Aufnahmevorrichtung einer Erntemaschine ähnlich Fig. 1, wobei der Förderrotor mit vier Reihen von Förderzinken konfiguriert ist, die an vier durchgängig ausgebildeten Querträgern befestigt sind,
- Fig. 3:: eine perspektivische Darstellung der Aufnahmevorrichtung eines Erntewagens mit einem Förderrotor, der ähnlich Fig. 1 drei Reihen von Förderzinken umfasst, wobei allerdings die Querträger geteilt ausgebildet sind und sich jeweils nur über einen Teil der Länge des gesamten Rotors erstrecken, wobei in axialer Richtung benachbarte Querträger in Umfangsrichtung zueinander versetzt angeordnet sind,
- Fig. 4:: eine Seitenansicht der Aufnahmevorrichtung aus Fig. 3, die in Blickrichtung parallel zur Rotordrehachse die drei Reihen von Förderzinken und den durch die geteilte Ausbildung der Querträger vorgesehenen Versatz der Förderzinkenreihen-Abschnitte zeigt,
- Fig. 5:: eine perspektivische Darstellung einer Aufnahmevorrichtung einer Erntemaschine ähnlich Fig. 3, wobei der Förderrotor bei geteilter Ausbildung der Querträger vier Reihen von Förderzinken und dementsprechend vier über den Umfang verteilte Querträger aufweist, und
- Fig. 6:: eine Seitenansicht der Aufnahmevorrichtung aus Fig. 5, die den Förderrotor in einer Blickrichtung parallel zur Rotordrehachse zeigt und dabei die jeweils vier Halteböcke und die an den Halteböcken befestigten Querträger und deren Umfangsversatz in Folge der geteilten Ausbildung der Querträger zeigt.

Die in den Figuren gezeigte Aufnahmevorrichtung 1 zum Aufnehmen von Erntegut kann Teil einer nicht vollständig gezeigten Erntemaschine sein, die beispielsweise als Ladewagen oder als Ballenpresse ausgebildet sein kann. Insbesondere kann die nur ausschnittsweise gezeigte Erntemaschine ein Anbaugerät sein, das beispielsweise über eine Deichsel an einen Schlepper angebaut werden kann, um im Feldbetrieb Erntegut vom Boden aufnehmen und in einen Laderaum des Ladewagens oder die Pressenkammer der Ballenpresse fördern zu können.

Wie die Figuren zeigen, kann die Aufnahmevorrichtung 1 eine Pickup 2 umfassen, die sich quer zur Fahrtrichtung erstrecken und Erntegut vom Boden aufnehmen kann. Die Pickup 2 kann beispielsweise eine Stachelwalze bilden, die um eine liegende Querachse umlaufend antreibbare Förderzinken umfasst, die Erntegut vom Boden aufnehmen und an einen Förderrotor 3 übergeben.

Der Förderrotor 3 kann das Erntegut durch einen Förderkanal 4 in einen Ziel- oder Weiterverarbeitungsbereich fördern, beispielsweise den Laderaum eines Ladewagens oder die Pressenkammer einer Ballenpresse. Der Förderrotor 3 kann dabei mit einem Schneidwerk zusammenarbeiten oder einen Teil eines Schneidwerks bilden, um das Erntegut zu zerschneiden. Beispielsweise kann eine Anordnung von Messern in den genannten Förderkanal 4 hineinragen, wobei die Förderzinken 5 an den Messern vorbeifahren bzw. -streifen können, um das Erntegut zu zerschneiden.

Der genannte Förderrotor 3 besitzt eine Antriebswelle 6, die sich bei Verwendung des Förderrotors 3 in einem Ladewagen oder einer Ballenpresse liegend quer zur Fahrtrichtung erstrecken kann. Die Antriebswelle 6 kann durchgängig ausgebildet sein und sich über die gesamte Breite des Förderkanals 4 hinweg erstrecken.

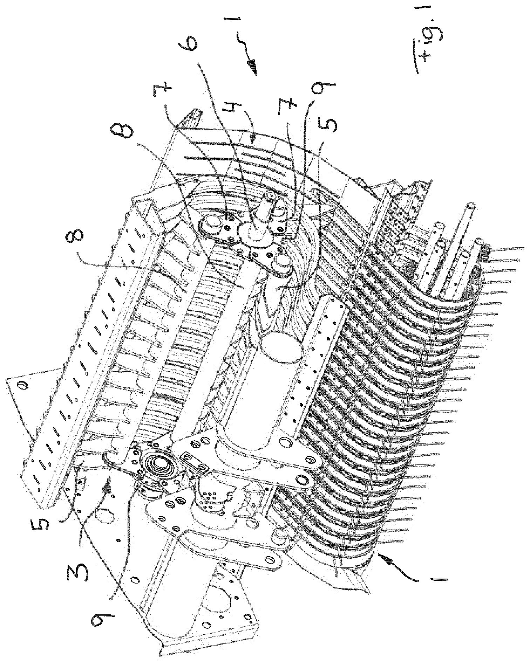

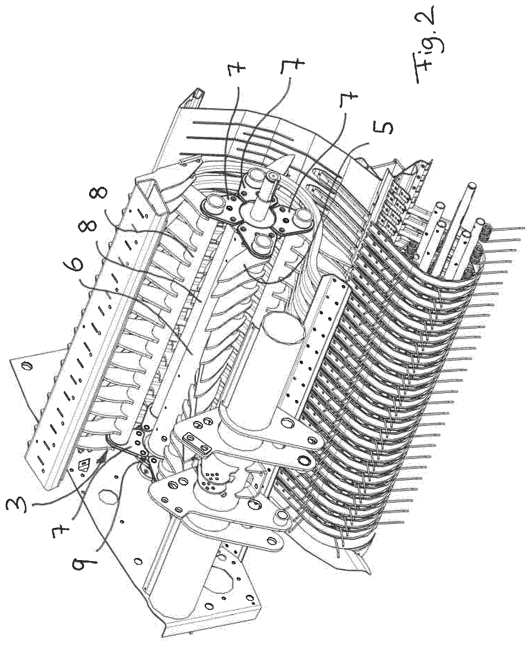

Wie die Figuren 1 und 2 zeigen, können von axialen Endabschnitten der Antriebswelle 6 Halteböcke 7 umfangsseitig vorspringen und Querträger 8 halten, die sich im Wesentlichen parallel zur Antriebswelle 6 von dieser beabstandet erstrecken und jeweils eine Gruppe von Förderzinken 5 tragen.

Die genannten Halteböcke 7 können als plattenförmige Halteflansche ausgebildet sein, die sich im Wesentlichen quer zur Längsachse der Antriebswelle 6 erstrecken und von dieser umfangsseitig vorspringen können.

Die genannten Halteböcke 7 können dabei an Wellenflanschen 9 und/oder stirnseitigen Endabschnitten der Antriebswelle 6 starr befestigt sein, sodass sich die Halteböcke 7 mit der Antriebswelle 6 mitdrehen und drehfest damit verbunden sind.

An den starr befestigten Halteböcken 7 sind die genannten Querträger 8 wiederum starr befestigt, wobei gemäß der Ausführung der Figuren 1 und 2 die Querträger 8 durchgängig ausgebildet sein und sich über die gesamte Länge der Antriebswelle 6 erstrecken können.

Die Querträger 8 sind über die Halteböcke 7 starr und damit drehfest mit der Antriebswelle 6 verbunden, sodass die Förderzinken 4, die an den Querträgern 8 angeschweißt oder in anderer Weise starr befestigt sein können, ungesteuert umlaufen und mit ihren auskragenden Enden stets einen gedachten Hüllzylinder um den Förderrotor 3 herum berühren können.

Vorteilhafterweise können die Halteböcke 7 lösbar an der Antriebswelle 6 befestigt sein. Alternativ oder zusätzlich können auch die Querträger 8 lösbar an den Halteböcken 7 befestigt sein. Beispielsweise können lösbare Schraubbolzenverbindungen zwischen den Halteböcken 7 und der Antriebswelle 6 und/oder zwischen den Halteböcken 7 und den Querträgern 8 vorgesehen sein.

Wie ein Vergleich der Figuren 1 und 2 zeigt, können an der Antriebswelle 6 wahlweise unterschiedlich viele Querträger 8, insbesondere unterschiedlich viele Halteböcke 7 befestigt werden, beispielsweise wahlweise zwei Halteböcke 7 oder wahlweise drei Halteböcke 7 oder wahlweise vier Halteböcke 7. Hierdurch können zwei, drei, oder vier Reihen von Förderzinken 5 an der Antriebswelle 6 montiert werden.

Beispielsweise kann der Wellenflansch 9 der Antriebswelle 6 ein Lochbild umfassen, das die Befestigung der Halteböcke 7 in unterschiedlichen Umfangsstellungen ermöglicht. Vorteilhafterweise können die Halteböcke 7 auch bei unterschiedlichen Anzahlen gleichmäßig verteilt über den Umfang montiert werden.

Wie die Figuren 1 und 2 zeigen, bilden die Querträger 8, die in Längsrichtung des Förderrotors 4 verlaufen, zusammen mit den Halteböcken 7, die sich quer zur Drehachse erstrecken, einen offenen, gitterartigen Käfig, der die Antriebswelle 6 umgibt und mit letzterer starr und drehfest verbunden ist. Dies ergibt eine insgesamt leichte und dennoch steife und stabile Rotorausbildung.

Die Antriebswelle kann durchgängig von Rotorende zu Rotorende ausgebildet sein, wie dies Figur 2 zeigt. Alternativ kann die Antriebswelle 6 auch geteilt ausgebildet sein, insbesondere von koaxial zueinander angeordneten Wellenstücken, die bspw. an den gegenüberliegenden Rotorenden angeordnet sein können, wie dies Figur 1 zeigt. Insbesondere kann die Antriebswelle nur aus zwei oder ggf. auch drei Wellenstummeln oder Wellentellern bestehen, an denen die Halteböcke 7 zum Halten der Querträger 8 befestigt sind, während die Antriebswelle 6 dazwischen in einem Zwischenabschnitt des Förderotors 1 ausgespart ist bzw. der Förderrotor 1 zentral zwischen den Rotorenden antriebswellenfrei ausgeführt sein kann, wie dies Figur 1 zeigt. Die genannten koaxialen Wellenstummel bzw. Wellenteller können separat jeweils drehbar um die Antriebwellenachse an einem Chassisteil der Aufnahmevorrichtung bzw. einem Maschinenrahmen gelagert sein.

Die Förderzinken 5, die an jeweils einem Querträger 8 zusammengefasst sind, sind in Umfangsrichtung zueinander verkippt, vgl. Figur 1 und Figur 2, die jeweils eine solche Zinkenanordnung zeigen.

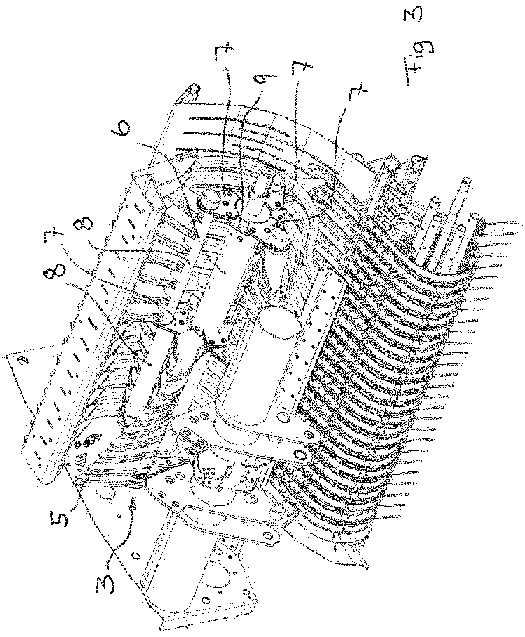

Wie die Figuren 3 bis 6 zeigen, können auch drei oder ggf. noch mehr Sätze von Halteböcken 7 an der Antriebswelle 6 in axialer Richtung verteilt vorgesehen sein. Insbesondere kann in einem mittleren Abschnitt der Antriebswelle 6 ein zusätzlicher Satz von Halteböcken 7 vorgesehen, insbesondere starr mit der Antriebswelle 6 verbunden sein, um die Querträger 8 auch mittig abzustützen bzw. die Verwendung geteilter Querträger 8 zu ermöglichen.

Wird eine noch kleinteiligere Unterteilung der Querträger 8 gewünscht, können auch vier oder fünf Sätze von Halteböcken 7 in axialer Richtung verteilt an der Antriebswelle 6 vorgesehen sein, um die Querträger 8 entsprechend kürzer auszubilden bzw. zu unterteilen. Es ermöglicht aber auch schon die Verwendung nur eines dritten Satzes von Halteböcken 7 in der Mitte der Antriebswelle 6 eine deutliche Vereinfachung der Montage und Demontage.

Die zusätzlichen Halteböcke 7, die in einem Abschnitt zwischen den randseitigen bzw. endseitigen Halteböcken 7 angeordnet sind, können vorteilhafterweise lösbar mit der Antriebswelle 6 verbunden sein, um wahlweise durchgängige Querträger 8 wie in den Figuren 1 und 2 oder geteilte Querträger 8 wie in den Figuren 3 bis 6 verwenden zu können.

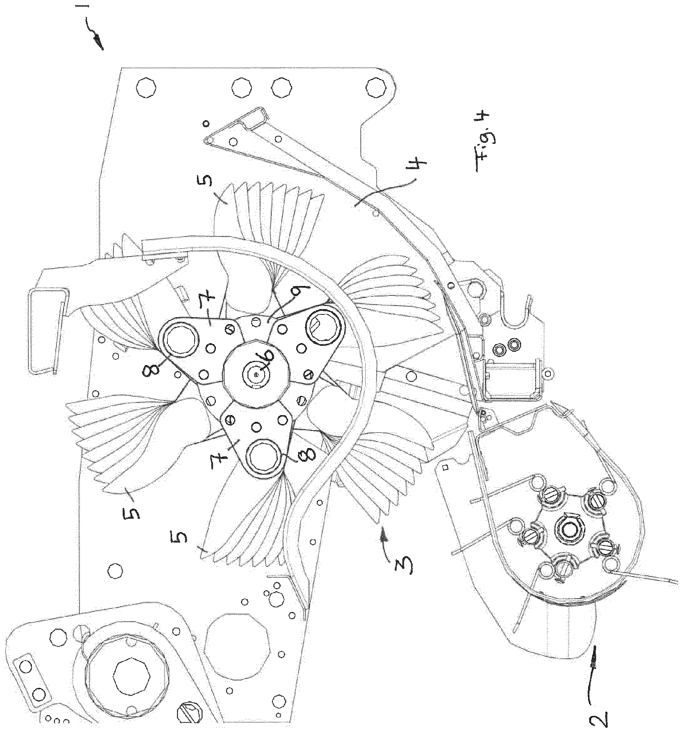

Wie Figur 3 und 4 zeigt, können beispielsweise "halbe" Querträger 8 Verwendung finden, die in etwa die halbe Länge der Antriebswelle 6 besitzen und einerseits an den Halteböcken 7 in einem axialen Endabschnitt der Antriebswelle 6 befestigt und andererseits an den Halteböcken 7 im mittleren Abschnitt der Antriebswelle 6 befestigt sind.

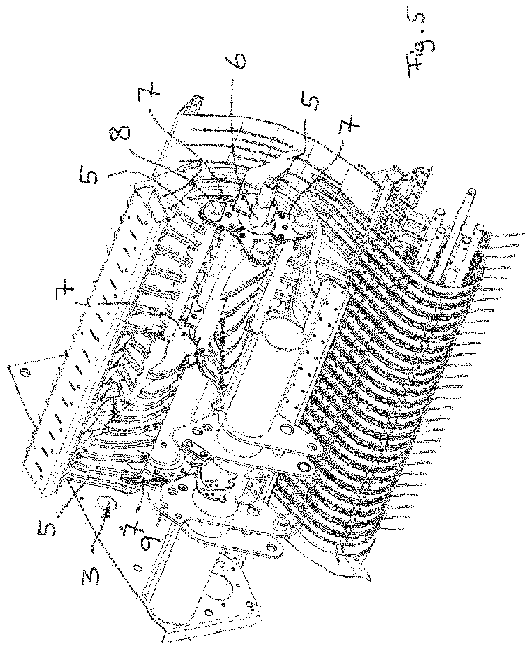

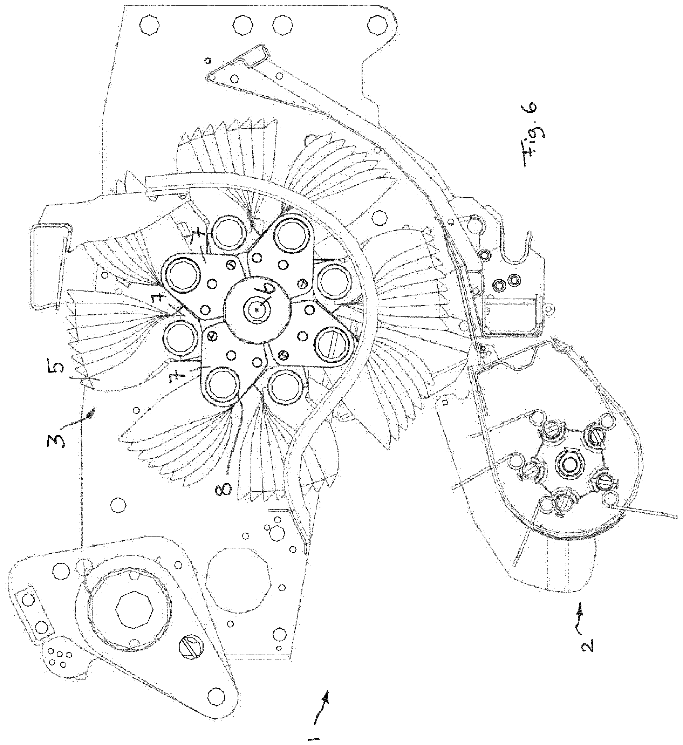

Dabei können über den Umfang verteilt drei Querträger 8 angeordnet werden, wie dies die Figuren 3 und 4 zeigen, oder es können vier Querträger 8 über den Umfang verteilt montiert werden, wie dies die Figuren 5 und 6 zeigen. Hierbei kann analog vorgegangen werden, wie dies für die Figuren 1 und 2 erläutert wurde, das heißt es können Halteböcke 7 entfernt oder ergänzt und jeweils ummontiert werden.

Wie die Figuren 3 und 4 sowie auch die Figuren 5 und 6 zeigen, können in axialer Richtung der Antriebswelle 6 benachbarte Querträgerteile in Umfangsrichtung versetzt montiert werden. Betrachtet man den Förderrotor 3 in Richtung der Drehachse, sind scheinbar sechs Reihen von Förderzinken vorgesehen, wie dies die Figur 4 zeigt. Allerdings zeigt Figur 4 zwei geteilte Sätze von Förderzinken, die in Figur 4 hintereinander zu sehen sind und gemäß Figur 3 in der rechten Hälfte und in der linken Hälfte des Förderkanals 4 arbeiten.

Wie die Figuren 5 und 6 zeigen, können auch bei geteilter Ausbildung der Querträger 8 vier Querträger über den Umfang verteilt vorgesehen werden. Auch hier kann ein linker Teil des Förderrotors 3 gegenüber einem rechten Teil des Förderrotors 3 in Umfangsrichtung versetzt angeordnet sein, was die Position der Querträger 8 und der daran befestigten Förderzinken 5 angeht.

## Patentansprüche

1. Erntemaschine, insbesondere in Form eines Ladewagens oder einer Ballenpresse, umfassend eine Pickup (2) mit einer umlaufenden Stachelwalze zum Aufheben von Erntegut vom Boden, sowie einen Förderrotor (3) mit einer drehbar gelagerten Antriebswelle (6) sowie einer Vielzahl von Förderzinken (5), die mit der Antriebswelle (6) drehfest verbunden sind, wobei der genannte Förderrotor (3) der genannten Pickup (2) nachgeordnet und einem Förderkanal (4) zugeordnet ist, der von der genannten Pickup (2) zu einem Speicher- und/oder Verarbeitungsraum der Erntemaschine führt, **dadurch gekennzeichnet, dass** die Förderzinken des Förderrotors (3) gruppenweise an Querträgern (8) befestigt sind, die von der Antriebswelle (6) radial beabstandet angeordnet und an Halteböcken (7) befestigt sind, die von der Antriebswelle (6) umfangsseitig vorspringen und drehfest mit der Antriebswelle (6) verbunden sind, wobei die jeweils auf einem Querträger (8) befestigten Förderzinken (5) in Umfangsrichtung der Antriebswelle (6) zueinander verkippt sind.

2. Erntemaschine nach dem vorhergehenden Anspruch, wobei die Querträger (8) zusammen mit den Halteböcken (7) einen starren, offenen Käfig bilden, der die Antriebswelle (6) umschließt und mit der Antriebswelle (6) drehfest oder starr verbunden ist.

3. Erntemaschine nach einem der vorhergehenden Ansprüche, wobei die Querträger (8) an den Halteböcken (7) lösbar befestigt, vorzugsweise verschraubt, sind und/oder die Halteböcke (7) an der Antriebswelle (6) lösbar befestigt, vorzugsweise verschraubt, sind.

4. Erntemaschine nach einem der vorhergehenden Ansprüche, wobei die Querträger (8) und/oder die Haltevorsprünge (7) in Umfangsrichtung versetzt an verschiedenen Positionen drehfest an der Antriebswelle (6) montierbar sind, sodass wahlweise unterschiedlich viele, vorzugsweise wahlweise zwei, drei, vier oder fünf, Querträger (8) in Umfangsrichtung gleichmäßig verteilt an der Antriebswelle (6) montierbar sind.

5. Erntemaschine nach einem der vorhergehenden Ansprüche, wobei zumindest zwei Halteböcke (7) oder zwei Sätze von Halteböcken (7) vorgesehen sind, die in axialen Endabschnitten der Antriebswelle (6) vorgesehen sind.

6. Erntemaschine nach dem vorhergehenden Anspruch, wobei die Querträger (8) durchgängig ausgebildet sind und mit gegenüberliegenden Trägerendabschnitten an den Halteböcken (7) in den axialen Endabschnitten der Antriebswelle (6) befestigt sind.

7. Erntemaschine nach einem der vorhergehenden Ansprüche, wobei zumindest ein dritter Haltebock oder ein dritter Satz von Halteböcken vorgesehen ist, der zwischen den axialen Endabschnitten der Antriebswelle (6) vorgesehen ist, insbesondere drehfest an der Antriebswelle (6) befestigt ist,

8. Erntemaschine nach dem vorhergehenden Anspruch, wobei die Querträger (8) geteilt ausgebildet sind und/oder eine Länge besitzen, die nur einen Bruchteil der Länge der Antriebswelle (6) und/oder des Förderrotors (1) besitzen, wobei die Querträger (8) jeweils mit gegenüberliegenden Trägerendabschnitten einerseits an einem Haltebock (7), der in einem axialen Endabschnitt der Antriebswelle (6) vorgesehen ist, und andererseits an einem Haltebock (7), der zwischen den axialen Endabschnitten der Antriebswelle (6) vorgesehen ist, befestigt sind.

9. Erntemaschine nach einem der vorhergehenden Ansprüche, wobei in axialer Richtung der Antriebwelle (6) benachbarte Querträger (8) in Umfangsrichtung der Antriebswelle (6) versetzt zueinander angeordnet sind.

10. Erntemaschine nach einem der vorhergehenden Ansprüche, wobei die Förderzinken (5) mit Fußabschnitten von der Antriebswelle (6) beabstandet sind und ein Antriebswellenaufnahmeraum innerhab der Querträger (8) mit Ausnahme von Abschnitten, an denen die Halteböcke (7) befestigt sind, durch Zwischenräume zwischen den Querträgern (8) hindurch zugänglich freiliegt.

11. Erntemaschine nach einem der vorhergehenden Ansprüche, wobei die Antriebswelle (6) durchgängig ausgebildet ist und sich von Ende zu Ende der Förderzinkenreihen erstreckt.

12. Erntemaschine nach einem der Ansprüche 1 bis 11, wobei die Antriebswelle (6) geteilt ausgebildet ist und zwei separate Antriebswellenteile aufweist, die im Bereich der Enden der Förderzinkenreihen angeordnet sind und jeweils zumindest einen Haltebock (7) tragen, wobei zumindest einer der Antriebswellenteile angetrieben ist.

13. Erntemaschine nach einem der vorhergehenden Ansprüche, wobei die Querträger (8) jeweils in Form eines länglichen Stabs, insbesondere eines hohlen Rohrstabs, ausgebildet sind.

14. Erntemaschine nach einem der vorhergehenden Ansprüche, wobei dem Förderrotor (3) ein Schneidwerk zugeordnet ist, das in den Förderkanal (4) hineinragende Messer umfasst, an denen die Förderzinken (5) vorbeistreifen, um das Erntegut zu zerschneiden.

## Claims

1. Harvesting machine, in particular in the form of a loader wagon or a baling press, comprising a pick-up (2) having a circulating spiked roller for picking-up harvested material from the ground, and a conveying rotor (3) having a rotatably-mounted drive shaft (6) and a plurality of conveying tines (5), which are co-rotatably connected to the drive shaft (6), wherein the conveying rotor (3) is arranged downstream of the pick-up (2) and is assigned to a conveying channel (4), which leads from the pick-up (2) to a storage and/or processing chamber of the harvesting machine, **characterized in that** the conveying tines of the conveying rotor (3) are fastened groupwise to crossbeams (8), which are arranged radially-spaced from the drive shaft (6) and fastened to holding brackets (7) circumferentially projecting from the drive shaft (6) and co-rotationally connected to the drive shaft (6), wherein the conveying tines (5) in each case fixed on a crossbeam (8) are tilted to one another in circumferential direction of the drive shaft (6).

2. Harvesting machine according to the preceding claim, wherein the crossbeams (8), together with the holding brackets (7), form a rigid, open cage enclosing the drive shaft (6) and co-rotationally or rigidly connected to the drive shaft (6).

3. Harvesting machine according to one of the preceding claims, wherein the crossbeams (8) are releasably fixed, preferably screwed, to the holding brackets (7) and/or the holding brackets (7) are releasably fixed, preferably screwed, to the drive shaft (6).

4. Harvesting machine according to one of the preceding claims, wherein the crossbeams (8) and/or the holding brackets (7) are mountable to the drive shaft (6) co-rotationally and offset in circumferential direction at different positions, such that optionally a different number, preferably optionally two, three, four or five crossbeams (8) are mountable to the drive shaft (6) in a distributed manner evenly spaced in circumferential direction.

5. Harvesting machine according to one of the preceding claims, wherein at least two holding brackets (7) or two sets of holding brackets (7) are provided, which are provided in axial end portions of the drive shaft (6).

6. Harvesting machine according to the preceding claim, wherein the crossbeams (8) are formed continuously and are fastened to the holding brackets (7) with opposite carrier end portions in the axial end portions of the drive shaft (6).

7. Harvesting machine according to one of the preceding claims, wherein at least a third holding bracket or a third set of holding brackets is provided, which is provided between the axial end portions of the drive shaft (6), in particular co-rotationally fastened to the drive shaft (6).

8. Harvesting machine according to the preceding claim, wherein the crossbeams (8) are of split design and/or have a length which only amounts to a fraction of the length of the drive shaft (6) and/or the conveying rotor (1), wherein the crossbeams (8) with opposite carrier end portions, are in each case fastened, on the one hand, to a holding bracket (7) provided in an axial end portion of the drive shaft (6) and on the other hand, are fastened to a holding bracket (7) provided between the axial end portions of the drive shaft (6).

9. Harvesting machine according to one of the preceding claims, wherein in axial direction of the drive shaft (6), neighboring crossbeams (8) are arranged offset to one another in circumferential direction of the drive shaft (6).

10. Harvesting machine according to one of the preceding claims, wherein the conveying tines (5) are spaced from the drive shaft (6) with foot portions and within the crossbeams (8), except for portions having the holding brackets (7) fixed thereto, a drive shaft receiving space is exposed so as to be accessible through interspaces between the crossbeams (8).

11. Harvesting machine according to one of the preceding claims, wherein the drive shaft (6) is formed continuously and extends from end-to-end of the conveying tine rows.

12. Harvesting machine according to one of Claims 1 to 11, wherein the drive shaft (6) is of split design and comprises two separate drive shaft parts, which are arranged in the region of the end of the conveying tine rows and in each case carry at least one holding bracket (7), wherein at least one of the drive haft parts is driven.

13. Harvesting machine according to one of the preceding claims, wherein the crossbeams (8) are in each case configured in the form of an elongated rod, in particular a hollow pipe rod.

14. Harvesting machine according to one of the preceding claims, wherein the conveying rotor (3) is assigned a cutting unit which comprises blades protruding into the conveying channel, which blades are scraped past by the conveying tines (5) in order to cut the harvested material.

## Revendications

1. Machine de récolte, en particulier sous la forme d'un chariot de chargement ou d'une presse à balles, comprenant un système de ramassage (2) avec un cylindre à aiguillons circulant en périphérie pour soulever le produit de récolte du sol, ainsi qu'un rotor de convoyage (3) avec un arbre d'entraînement (6) monté de manière à pouvoir tourner ainsi qu'une pluralité de dents de convoyage (5), qui sont reliées de manière solidaire en rotation à l'arbre d'entraînement (6), dans lequel ledit rotor de convoyage (3) est disposé en aval dudit système de ramassage (2) et est associé à un canal de convoyage (4), qui mène depuis ledit système de ramassage (2) à un espace de stockage et/ou de traitement de la machine de récolte, **caractérisée en ce que** les dents de convoyage du rotor de convoyage (3) sont fixées par groupes sur des traverses (8), qui sont disposées de manière espacée radialement de l'arbre d'entraînement (6) et sont fixées sur des blocs de maintien (7), qui font saillie côté périphérique de l'arbre d'entraînement (6) et sont reliés de manière solidaire en rotation à l'arbre d'entraînement (6), dans lequel les dente de convoyage (5) fixées respectivement sur une traverse (8) sont basculées les unes par rapport aux autres dans la direction périphérique de l'arbre d'entraînement (6).

2. Machine de récolte selon la revendication précédente, dans laquelle les traverses (8) forment conjointement avec les blocs de maintien (7) une cage rigide ouverte, qui renferme l'arbre d'entraînement (6) et est reliée de manière solidaire en rotation ou de manière rigide à l'arbre d'entraînement (6).

3. Machine de récolte selon l'une quelconque des revendications précédentes, dans laquelle les traverses (8) sont fixées de manière amovible, de préférence sont vissées, sur les blocs de maintien (7), et/ou les blocs de maintien (7) sont fixés, de préférence sont vissés, de manière amovible sur l'arbre d'entraînement (6).

4. Machine de récolte selon l'une quelconque des revendications précédentes, dans lequel les traverses (8) et/ou les parties faisant saillie de maintien (7) peuvent être montées sur l'arbre d'entraînement (6) de manière solidaire en rotation sur différentes positions de manière décalée dans la direction périphérique si bien qu'au choix qu'un nombre variable, de préférence au choix deux, trois, quatre ou cinq traverses (8) peuvent être montées sur l'arbre d'entraînement (6) avec une répartition homogène dans la direction périphérique.

5. Machine de récolte selon l'une quelconque des revendications précédentes, dans laquelle au moins deux blocs de maintien (8) ou deux jeux de blocs de maintien (7) sont prévus, qui sont prévus dans des sections d'extrémité axiales de l'arbre d'entraînement (6).

6. Machine de récolte selon la revendication précédente, dans laquelle les traverses (8) sont réalisées de manière continue et sont fixées dans les sections d'extrémité axiales de l'arbre d'entraînement (6) sur les blocs de maintien (7) par des sections d'extrémité de support opposées.

7. Machine de récolte selon l'une quelconque des revendications précédentes, dans laquelle au moins un troisième bloc de maintien ou un troisième jeu de blocs de maintien est prévu, qui est prévu entre les sections d'extrémité axiales de l'arbre d'entraînement (6), en particulier est fixé de manière solidaire en rotation sur l'arbre d'entraînement (6).

8. Machine de récolte selon la revendication précédente, dans laquelle les traverses (8) sont réalisées de manière divisée et/ou possèdent une longueur, qui possèdent seulement une infime partie de la longueur de l'arbre d'entraînement (6) et/ou du rotor de convoyage (1), dans laquelle les traverses (8) sont fixées respectivement par des sections d'extrémité de support opposées d'une part sur un bloc de maintien (7), qui est prévu dans une section d'extrémité axiale de l'arbre d'entraînement (6), et d'autre part sur un bloc de maintien (7), qui est prévu entre les sections d'extrémité axiales de l'arbre d'entraînement (6).

9. Machine de récolte selon l'une quelconque des revendications précédentes, dans laquelle des traverses (8) adjacentes dans une direction axiale de l'arbre d'entraînement (6) sont disposées de manière décalée les unes par rapport aux autres dans la direction périphérique de l'arbre d'entraînement (6).

10. Machine de récolte selon l'une quelconque des revendications précédentes, dans laquelle les dents de convoyage (5) sont espacées de l'arbre d'entraînement (6)par des sections de pied et un espace de logement d'arbre d'entraînement est à découvert de manière accessible par des espaces intermédiaires entre les traverses (8) de part en part à l'intérieur des traverses (8) à l'exception de sections, sur lesquelles sont fixés les blocs de maintien (7).

11. Machine de récolte selon l'une quelconque des revendications précédentes, dans laquelle l'arbre d'entraînement (6) est réalisé de manière continue et s'étend d'extrémité en extrémité des rangées de dents de convoyage.

12. Machine de récolte selon l'une quelconque des revendications 1 à 11, dans laquelle l'arbre d'entraînement (6) est réalisé de manière divisée et présente deux parties d'arbre d'entraînement différentes, qui sont disposées dans la zone des extrémités des rangées de dents de convoyage et supportent respectivement au moins un bloc de maintien (7), dans laquelle au moins une des parties d'arbre d'entraînement est entraînée.

13. Machine de récolte selon l'une quelconque des revendications précédentes, dans laquelle les traverses (8) sont réalisées respectivement sous la forme d'une barre allongée, en particulier d'une barre tubulaire creuse.

14. Machine de récolte selon l'une quelconque des revendications précédentes, dans laquelle est associé au rotor de convoyage (3) un mécanisme de coupe, qui comprend des couteaux dépassant dans le canal de convoyage (4), qui sont longés par les dents de convoyage (5) pour fragmenter le produit de récolte.
